# EUROPÄISCHE PATENTSCHRIFT

(11) **EP 3 548 717 B1**
(45) Veröffentlichungstag und Bekanntmachung des Hinweises auf die Patenterteilung: **03.05.2023**
(21) Anmeldenummer: 17823036.3
(22) Anmeldetag: 28.11.2017
(51) Int. Cl.: F01L 1/047, B25B 27/00, F16J 15/3268

(54) **VERFAHREN ZUR MONTAGE MINDESTENS EINES DICHTRINGES AN EINER NOCKENWELLE IN EINER LAGERGASSE EINER VERBRENNUNGSKRAFTMASCHINE**
METHOD FOR MOUNTING AT LEAST ONE SEALING RING ON A CAMSHAFT IN A BEARING LINE OF AN INTERNAL COMBUSTION ENGINE
PROCÉDÉ DE MONTAGE D'AU MOINS UNE BAGUE D'ÉTANCHÉITÉ SUR UN ARBRE À CAMES DANS VOIE SUPPORT D'UN MOTEUR À COMBUSTION INTERNE

(30) Priorität: 02.12.2016 DE 102016224040
(43) Veröffentlichungstag der Anmeldung: 09.10.2019
(73) Patentinhaber: thyssenkrupp Dynamic Components TecCenter AG, 9492 Eschen (LI); thyssenkrupp AG, 45143 Essen (DE)
(72) Erfinder: CURLIC, Marko, 9486 Schaanwald (LI); PFITSCHER, Aaron, 6713 Ludesch (AT); MUSTER, Manfred, 6713 Ludesch (AT); SIDHU, Kanwar Bir Singh, 88131 Bodolz (DE); SCHLEMMER, Reinhard, 6845 Hohenems (AT)
(74) Vertreter: thyssenkrupp Intellectual Property GmbH
(86) Internationale Anmeldenummer: PCT/EP2017/080593
(87) Internationale Veröffentlichungsnummer: WO 2018/099885

(56) Entgegenhaltungen:
- EP-A2- 1 845 238
- DE-A1-102009 049 217
- DE-A1-102012 220 652
- US-A- 4 004 443
- US-A- 4 671 696
- US-A1- 2007 067 978
- US-A1- 2011 114 046
- US-A1- 2016 273 639
- US-B2- 7 434 572

## Beschreibung

Die Erfindung betrifft ein Verfahren zur Montage einer Nockenwelle gemäß Anspruch 1 oder Anspruch 2.

Nockenwellen sind an einem Zylinderkopf einer Verbrennungskraftmaschine unterhalb einer abgedichteten Zylinderkopfhaube in Lagern, die eine Lagergasse bilden, drehbar gelagert. Zur Schmierung wird ein geeignetes Schmieröl eingesetzt, so dass neben der Abdichtung der Zylinderkopfhaube am Zylinderkopf auch Dichtelemente an einer Nockenwelle erforderlich sind. Dazu werden Dichtringe auf einer geeigneten Oberfläche der Nockenwelle, insbesondere im Bereich eines Endstückes, jeweils mit einer radial an der Oberfläche ausgebildeten umlaufenden Nut fixiert.

Aus Kostengründen werden Nockenwellen als ganzes Teil in die Lager, die eine Lagergasse bilden, eingesetzt. Dabei sind die Lager in der Regel bereits geschlossen, so dass die Nockenwelle durch die Öffnungen der einzelnen Lager eingeführt werden muss.

Dabei gibt es aber Probleme mit den über den äußeren Umfang der Nockenwelle überstehenden Bereichen der Dichtringe, die bei der Montage der Nockenwelle beschädigt werden können. Der Überstand wird durch die Montage der Dichtringe auf die Nockenwelle erhöht, da sich Dichtringe dabei aufweiten. Auch durch die Elastizität allein reduziert sich die Aufweitung nicht in ausreichendem Maß. Ein Dichtring wird so zwar kraft- und formschlüssig in einer an der äußeren Mantelfläche ausgebildeten Nut gehalten. Die so erreichbare Fixierung genügt aber den Anforderungen an eine sicher Dichtwirkung und Befestigung des jeweiligen Dichtringes an der Nockenwelle nicht in ausreichendem Maß.

Ein wie vorab erläutertes Verbauen unterhalb der Zylinderkopfhaube ist dabei ebenfalls nicht möglich, ohne dass gesichert werden kann, dass kein Dichtring bei der Montage beschädigt oder entlang der Längsachse der Nockenwelle so verschoben wird, dass keine sichere Abdichtung mehr erreicht werden kann.

Ein Verfahren zur Montage einer Nockenwelle in einer Lagergasse einer Verbrennungskraftmaschine ist beispielsweise aus der DE 10 2009 049 217 A1 bekannt geworden. Hier wird unter anderem ein Montieren mindestens eines Dichtringes an der Nockenwelle beschrieben, derart, dass der mindestens eine Dichtring auf einen Bereich der Nockenwelle, in welchem wenigsten eine am äußeren Durchmesser der Nockenwelle radial umlaufende Nut ausgebildet ist, aufgeschoben wird, so dass der Dichtring in der Nut angeordnet ist; wobei der Dichtring zumindest teilweise aus einem elastisch verformbaren Polymer, insbesondere einem Polytetrafluorethylen (PTFE) gebildet ist.

Es ist daher Aufgabe der Erfindung, Möglichkeiten für eine sicherere Montage von Dichtringen anzugeben, die eine Beschädigung vermeiden und die gewünschte Dichtwirkung gewährleisten.

Erfindungsgemäß wird diese Aufgabe mit einem Verfahren, das die Merkmale des Anspruchs 1 oder 2 aufweist, gelöst. Vorteilhafte Ausgestaltungen und Weiterbildungen der Erfindung können mit in untergeordneten Ansprüchen bezeichneten Merkmalen realisiert werden.

Bei dem erfindungsgemäßen Verfahren wird mindestens ein Dichtring, der zumindest teilweise aus einem elastisch verformbaren Polymer, insbesondere mit Polytetrafluorethylen (PTFE) gebildet ist, auf die äußere Oberfläche der Nockenwelle einer Verbrennungskraftmaschine aufgeschoben. Bevorzugt werden zwei Dichtringe in paralleler Anordnung zueinander aufgeschoben und jeweils mit einer Nut daran fixiert. Die Nuten sind dabei in Längsrichtung der Nockenwelle in einem Abstand zueinander angeordnet.

Der mindestens eine Dichtring wird dabei auf einen Bereich der Nockenwelle, in dem eine am äußeren Durchmesser der Nockenwelle radial umlaufende Nut ausgebildet ist, aufgeschoben, so dass der jeweilige Dichtring in der Nut angeordnet ist. Der mindestens eine Dichtring ist in der Nut kraft- und formschlüssig gehalten.

Beim Montieren wird in einer ersten Alternative ein Kalibrierwerkzeug mit einer rotationssymmetrischen Öffnung, deren kleinster Innendurchmesser größer als der Außendurchmesser der Nockenwelle im Bereich der jeweiligen Nut und kleiner als der Außendurchmesser des mindestens einen auf die Nockenwelle im Bereich der Nut aufgeschobenen Dichtrings ist, über den mindestens einen Dichtring geschoben, so dass der mindestens eine Dichtring in die jeweilige Nut eingedrückt wird und in der Nut kraft- und formschlüssig gehalten ist.

In einer zweiten Alternative der Erfindung erfolgt beim Montieren ein Einschieben der Nockenwelle derart in ein Kalibrierwerkzeug mit einer rotationssymmetrischen Öffnung, deren kleinster Innendurchmesser größer als der Außendurchmesser der Nockenwelle im Bereich der jeweiligen Nut und kleiner als der Außendurchmesser des mindestens einen auf die Nockenwelle im Bereich der Nut aufgeschobenen Dichtrings ist, so dass der mindestens eine Dichtring in die Nut eingedrückt wird und in der Nut kraft- und formschlüssig gehalten ist.

Die Nockenwelle kann in die Lager einer Lagergasse, die an einem Zylinderkopf der Verbrennungskraftmaschine angebracht sind, eingeführt und das Kalibrierwerkzeug von der Nockenwelle vor oder während des Einführens der Nockenwelle in die Lagergasse abgezogen oder abgestreift werden.

Vorteilhaft kann ein Kalibrierwerkzeug eingesetzt werden, das zumindest einen sich konisch verjüngenden Bereich ausgehend von einer Strinseite einer Öffnung des Kalibrierwerkzeugs aufweist. Dabei sollte der Innendurchmesser der Öffnung an der Seite des Kalibrierwerkzeugs, die zuerst auf den mindestens einen Dichtring aufgeschoben wird, größer als der Außendurchmesser des mindestens einen Dichtrings nach dem Aufschieben auf die Nockenwelle sein.

Der sich konisch verjüngende Bereich kann in einen zylinderförmigen Bereich mit konstantem Innendurchmesser übergehen. Der konstante Innendurchmesser sollte dem Wert entsprechen, den der Außendurchmesser des Dichtringes bei der Montage der mit Dichtring bestückten Nockenwelle aufweisen soll. Eine solche Ausbildung kann bei einer Ausführung des Kalibrierwerkzeuges mit an zwei gegenüberliegend angeordneten Öffnungen eingesetzt werden.

Ein Kalibrierwerkzeug mit lediglich einer Öffnung in die der Bereich der Nockenwelle an dem die Nut(en) für die Fixierung des/der Dichtringe(s) mit dem/den aufgeschobenen Dichtring(en) eingeschoben werden kann, kann über die gesamte Länge eines kegelstumpfförmigen Hohlraumes im Inneren des Kalibrierwerkzeuges ausgehend von der dann einen Öffnung sich konisch verjüngend ausgebildet sein. Der kleinste Innendurchmesser in diesem Hohlraum sollte dabei dem maximalen Außendurchmesser des in die jeweilige Nut mit dem Kalibrierwerkzeug eingedrückten Dichtringes entsprechen.

Die Nockenwelle sollte vor dem Einführen in die Lager der Lagergasse oder vor dem Aufschieben des Kalibrierwerkzeuges gekühlt werden. Dies kann allein oder auch mit dem bereits aufgeschobenen Dichtring(en) erfolgen, so dass die Möglichkeit besteht, dass die Nockenwelle mit dem bereits aufgeschobenen Dichtring gemeinsam gekühlt wird. Bei der Kühlung sollte eine Temperatur von maximal - 100 °C erreicht werden. Eine Kühlung kann bevorzugt durch Eintauchen der Nockenwelle in flüssigen Stickstoff erfolgen.

Es besteht auch die Möglichkeit, dass die Nockenwelle mit dem bereits aufgeschobenen mindestens einen Dichtring gemeinsam mit dem Kalibrierwerkzeug oder ohne das Kalibrierwerkzeug gekühlt wird

Das Kalibrierwerkzeug kann in einer Alternative vor oder nach dem Kühlen über den mindestens einen Dichtring geschoben und der mindestens eine Dichtring dadurch tiefer in die jeweilige Nut eingedrückt werden. Die als Hohlraum oder Hohlzylinder im Kalibrierwerkzeug ausgebildete Aufnahme, die über einen jeweiligen bereits teilweise in einer Nut kraft- und formschlüssig fixierten Dichtring geschoben werden kann, sollte mit ihrem Innendurchmesser so dimensioniert sein, dass ein Dichtring mit dem Kalibrierwerkzeug zwar tiefer in die jeweilige Nut eingedrückt wird, dabei aber die äußere Mantelfläche des Dichtrings im Bereich seines kleinsten Innendurchmessers den Boden der jeweiligen Nut nicht erreicht und somit ein Spalt zwischen dem äußeren Mantel der jeweiligen Dichtung mit bevorzugt kreisförmigem Querschnitt und dem Boden der Nut verbleibt. Der jeweilige Dichtring ist trotzdem ausreichend fest und sicher kraft- und formschlüssig in der Nut mit dem entsprechenden Bereich der Nockenwelle verbunden.

Bei der Durchführung des Verfahrens kann ein Aufbau für die Montage des/der Dichtringe(s) und das Einführen der Nockenwelle in die Lager der Lagergasse eingesetzt werden, bei dem die Nockenwelle mit dem bereits aufgeschobenen und in der jeweiligen Nut kraft- und formschlüssig fixierten mindestens einen Dichtring beim Einführen in die Lager der Lagergasse durch ein vor dem in Einführrichtung der Nockenwelle vor dem ersten Lager angeordnetes Kalibrierwerkzeug geschoben und dabei der mindestens eine Dichtring tiefer in die jeweilige Nut hinein gedrückt wird.

Der mindestens eine Dichtring sollte auf eine jeweilige Nut, die im Bereich eines Endstückes der Nockenwelle ausgebildet ist, geschoben und in diese Nut mit dem Kalibrierwerkzeug eingedrückt werden. Ein Endstück kann ein Teil einer einstückigen Nockenwelle oder ein mit dem die Nocken tragenden Teil der Nockenwelle verbundenes Einzelteil einer gebauten Nockenwelle sein.

Der mindestens eine Dichtring sollte mittels des Kalibrierwerkzeuges so tief in die jeweilige Nut eingedrückt werden, dass mindestens 5 %, bevorzugt mindestens 10 % seines Volumens außerhalb der Nut angeordnet sind und über die Oberfläche des Bereiches, an dem der/die Dichtring(e) fixiert sind, überstehen.

Der mindestens eine Dichtring sollte vorteilhaft mit dem Kalibrierwerkzeug soweit in die mindestens eine Nut hineingedrückt werden, so dass die äußere Mantelfläche des Dichtringes im Bereich seines kleinsten Innendurchmessers den Boden der jeweiligen Nut nicht erreicht. Dadurch kann eine Beschädigung des jeweiligen Dichtringes bei der Montage vermieden werden und die durch die elastische Verformbarkeit des Dichtringes erreichbare Dichtwirkung verbessert werden, da der Dichtring den Boden der jeweiligen Nut bei der Montage und beim Betrieb der jeweiligen Verbrennungskraftmaschine nicht berührt.

Nachfolgend soll die Erfindung beispielhaft näher erläutert werden. Die in den einzelnen Beispielen und Figuren beschriebenen und erkennbaren Merkmale können unabhängig vom jeweiligen Beispiel oder der Figur miteinander kombiniert werden. Einzelne Merkmale sind nicht auf das jeweilige Beispiel oder die jeweilige Figur beschränkt.

Dabei zeigen:
- Figur 1: eine Ansicht eines Teiles einer Nockenwelle an einer Stirnseite ohne Dichtringe;
- Figur 2: die Darstellung von Figur 1 mit vormontierten aufgeweiteten Dichtringen;
- Figur 3: den in den Figuren 1 und 2 gezeigten Teil der Nockenwelle mit einem auf Dichtringe aufgeschobenen Kalibrierwerwerkzeug;
- Figur 4: eine Darstellung einer Nockenwelle mit einem mit Dichtringen versehenen Endstück an dem ein Kalibrierwerkzeug bei der Montage der Nockenwelle in eine Lagergasse eines Zylinderkopfes vorhanden ist.
- Figur 5: in schematischer Form ein Kalibrierwerkzeug, das an einem Lager einer Lagergasse angeordnet ist, mit dem ein Hineindrücken aufgeweiter Dichtringe erreichbar ist.
- Figur 6: in schematischer Form eine Darstellung mit möglichen Abläufen für die Verfahrensführung bei der Montage mindestens eines Dichtringes an einer Nockenwelle.

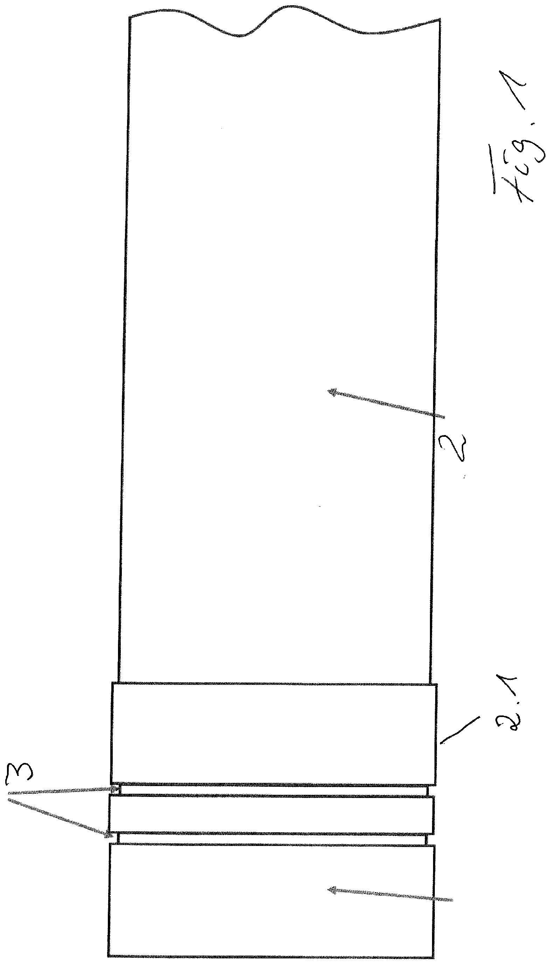

In Figur 1 ist ein Teil einer Nockenwelle 2, an deren einer Stirnseite ein Endstück 2.1 Bestandteil der Nockenwelle 2 oder das Endstück 2.1 mit der Nockenwelle 2 verbunden ist, gezeigt. Im Bereich des Endstücks 2.1 sind zwei parallele Nuten 3 senkrecht zur Längsachse der Nockenwelle 2 radial umlaufend ausgebildet.

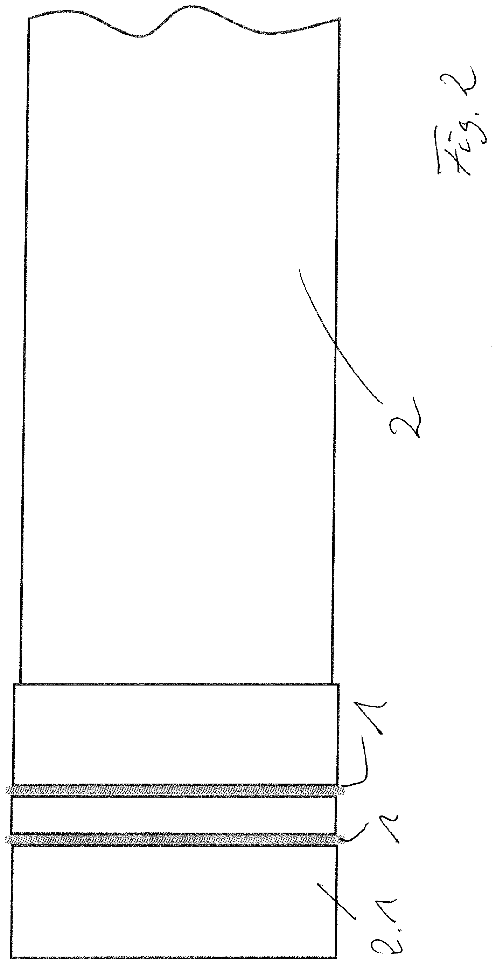

In der Darstellung von Figur 2 sind zwei Dichtringe 1 aus PTFE auf das Endstück 2.1 von der hier links gezeigten Seite soweit aufgeschoben worden, dass die Dichtringe 1 in der jeweiligen Nut 3 auch formschlüssig gehalten sind, aber zu hoch über die äußere Oberfläche im Bereich des Endstücks 2.1 überstehen. Beim Aufschieben wurden die elastischen Dichtringe 1 aufgeweitet.

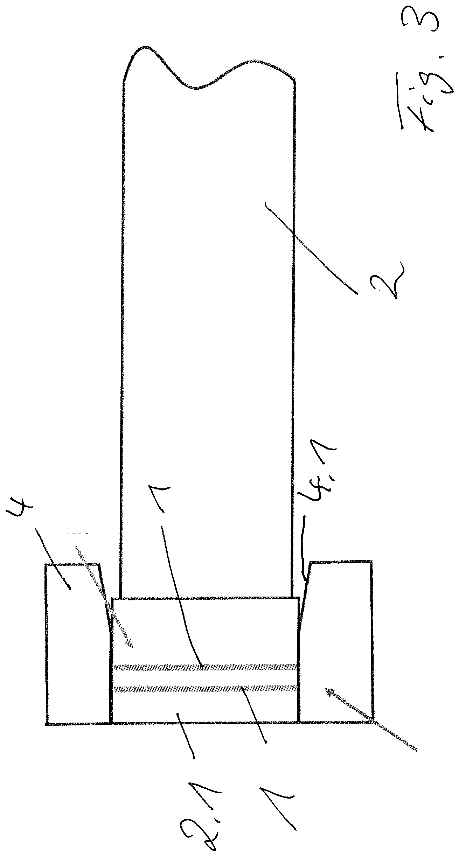

Durch das Aufschieben des Kalibrierwerkzeugs 4 von einer Seite auf den Bereich des Endstücks 2.1 der Nockenwelle 2 werden die Dichtringe 1 in die jeweilige Nut 3 tiefer hineingedrückt. Das Kalibrierwerkzeug 4 weist bei dem in Figur 3 gezeigten Beispiel einen Hohlzylinder auf. Bei dem in Figur 3 gezeigten Beispiel weist das Kalibrierwerkzeug 4 an der Stirnseite, die zuerst auf das Endstück 2.1 und die Dichtringe 1 aufgeschoben wird innenseitig einen sich konisch verjüngenden Bereich 4.1 auf, dessen größter Innendurchmesser an der Stirnseite angeordnet ist, die zuerst auf das Endstück 2.1 aufgeschoben wird. An den sich konisch verjüngenden Bereich 4.1 schließt sich ein Bereich an dessen Innendurchmesser konstant ist und dem kleinsten Innendurchmesser, der wiederum dem größten Außendurchmesser der Dichtringe 1entspricht, den die Dichtringe 1 während der Montage der Nockenwelle 2 in die Lagergasse aufweisen sollen. Der Bereich des Kalibrierwerkzeugs 4 mit dem konstanten Innendurchmesser hat eine Breite in Längsachsrichtung der Nockenwelle 2, mit der gesichert werden kann, dass alle Dichtringe 1 entsprechend tief in die jeweilige Nut 3 eingedrückt werden, wenn das Kalibrierwerkzeug 4 auf das Endstück 2.1 und die Dichtringe 1 aufgeschoben worden ist.

Durch das Aufschieben des Kalibrierwerkzeugs 4 werden die Dichtringe tiefer in die Nuten 3 soweit hineingedrückt, dass sie mit ihrem äußeren Durchmesser über die äußere Oberfläche des Endstücks 2.1 überstehen und den Boden der jeweiligen Nut 3 nicht berühren.

Mit dem Pfeil in Figur 3 soll die Bewegungsrichtung des Kalibrierwerkzeugs 4 beim Aufschieben auf den jeweiligen Dichtring 1 verdeutlicht werden, durch die der jeweilige Dichtring 1 definiert in die entsprechende Nut 3 eingeführt und darin formschlüssig und kraftschlüssig fixiert werden kann.

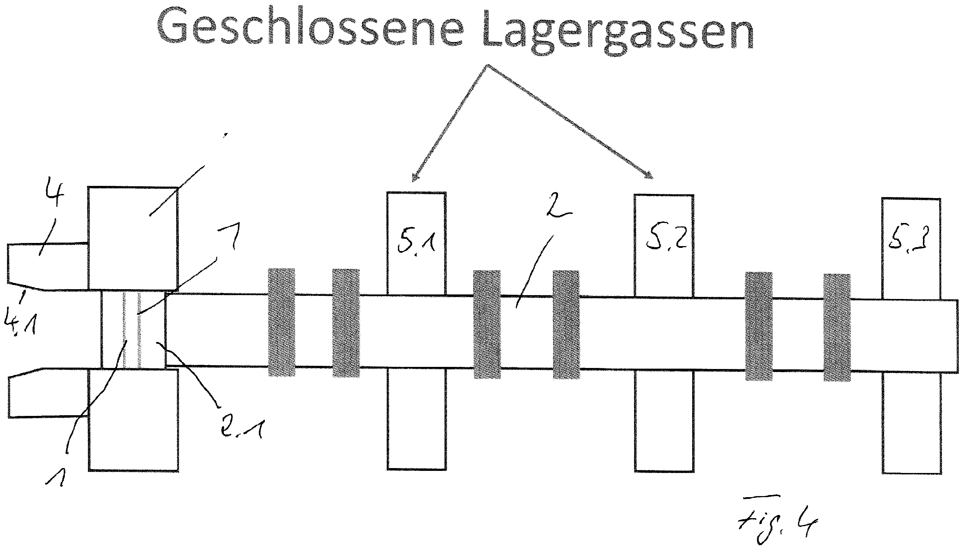

In schematischer Form zeigt Figur 4 eine Ansicht einer Nockenwelle 2, die in die mit den Lagern 5.1, 5.2 und 5.3 gebildete Lagergasse einer Verbrennungskraftmaschine hier von links nach rechts eingeschoben worden ist. Dabei sind die zwei in den Nuten 3 des Endstücks 2.1 fixierten Dichtringe 1 mittels des Kalibrierwerkzeugs 4 nach dem Aufschieben und dementsprechenden Aufweiten tiefer in die jeweilige Nut 3 hinein gedrückt worden.

Nach der Montage der Nockenwelle 2 kann das Kalibrierwerkzeug 4 wieder abgezogen werden. Das Abziehen kann bei der Montage der Nockenwelle 2 von einem der Lager 5.x unterstützt werden, gegen das das Kalibrierwerkzeug 4 beim Einführen der Nockenwelle 2 in die Lagergasse anstößt und dadurch abgestreift wird. Dieser Sachverhalt ist in Figur 4 nicht dargestellt.

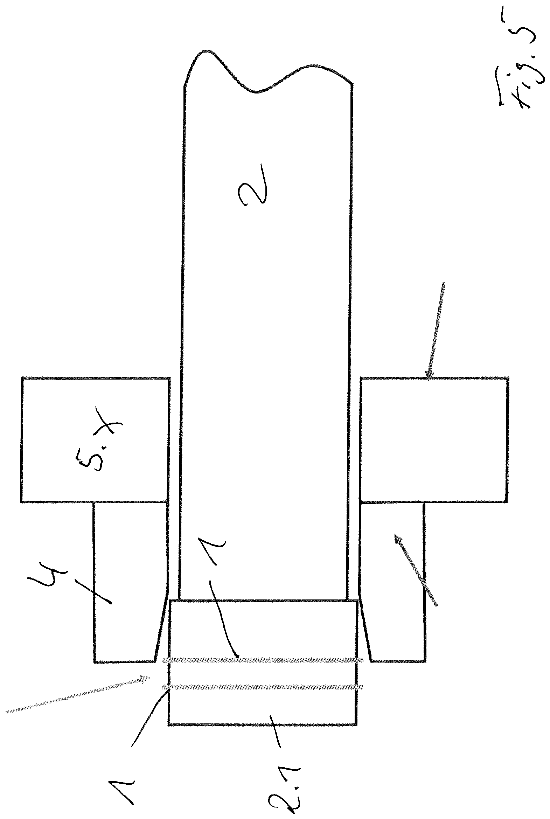

Die Figur 5 zeigt ein Beispiel bei dem sich ein Kalibrierwerkzeug 4 bei der Montage einer Nockenwelle 2 in die geschlossene Lagergasse an einem der Lager 5.x abstützt.

Ein Kalibrierwerkzeug 4 kann aber auch mit einer Manipulatoreinheit (nicht gezeigt) entsprechend bewegt werden, so dass ein Aufschieben und Abziehen möglich ist.

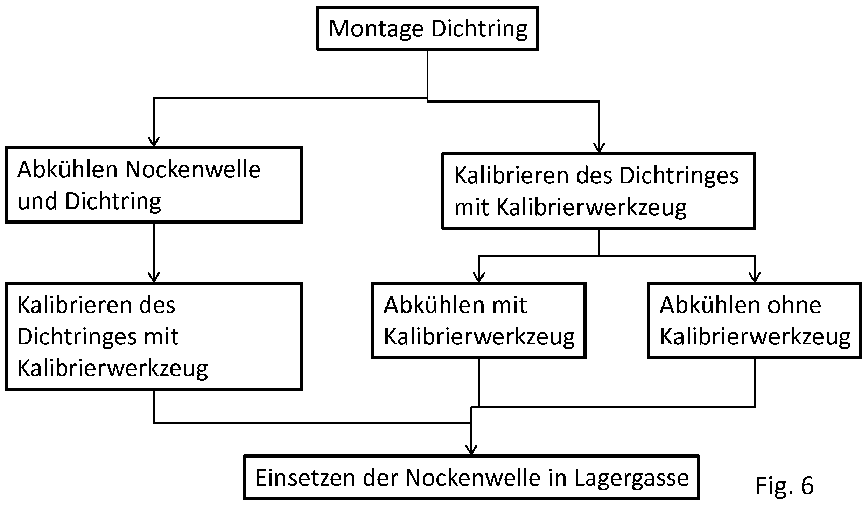

In Figur 6 sind verschiedene Möglichkeiten für die Montage mindestens eines Dichtringes an einer Nockenwelle gezeigt. So kann eine Nockenwelle mit oder ohne bereits montiertem Dichtring vor dem Einführen in die Lagergasse einer Verbrennungskraftmaschine gekühlt werden, wie dies im allgemeinen Teil der Beschreibung erwähnt ist.

Das Abkühlen der Nockenwelle kann auch mit dem bereits montierten mindestens einen Dichtring gemeinsam mit dem Kalibrierwerkzeug oder nach dem Abziehen des Kalibrierwerkzeuges vor dem Montieren der Nockenwelle in die Lagergasse der Verbrennungskraftmaschine erfolgen.

## Patentansprüche

1. Verfahren zur Montage einer Nockenwelle (2) in einer Lagergasse einer Zylinderkopfhaube einer Verbrennungskraftmaschine, wobei das Verfahren zumindest die folgenden Schritte aufweist:
- Montieren mindestens eines Dichtringes (1) an der Nockenwelle (2) derart, dass der mindestens eine Dichtring (1) auf einen Bereich der Nockenwelle (2), in welchem wenigstens eine am äußeren Durchmesser der Nockenwelle (2) radial umlaufende Nut (3) ausgebildet ist, aufgeschoben wird, so dass der Dichtring (1) in der Nut (3) angeordnet ist; wobei der Dichtring (1) zumindest teilweise aus einem elastisch verformbaren Polymer, insbesondere einem Polytetrafluorethylen (PTFE) gebildet ist, **gekennzeichnet durch** die nachfolgenden Verfahrensschritte:
- Schieben eines Kalibrierwerkzeuges (4) mit einer rotationssymmetrischen Öffnung, deren kleinster Innendurchmesser größer als der Außendurchmesser der Nockenwelle (2) im Bereich der jeweiligen Nut (3) und kleiner als der Außendurchmesser des mindestens einen auf die Nockenwelle (2) im Bereich der Nut (3) aufgeschobenen Dichtrings (1) ist, derart über den mindestens einen Dichtring (1), oder
- Einschieben der Nockenwelle (2) derart in ein Kalibrierwerkzeug (4) mit einer rotationssymmetrischen Öffnung, deren kleinster Innendurchmesser größer als der Außendurchmesser der Nockenwelle (2) im Bereich der jeweiligen Nut (3) und kleiner als der Außendurchmesser des mindestens einen auf die Nockenwelle (2) im Bereich der Nut (3) aufgeschobenen Dichtrings (1) ist,
dass der mindestens eine Dichtring (1) in die jeweilige Nut (3) eingedrückt sowie kraftschlüssig und formschlüssig in der Nut (3) gehalten wird.

2. Verfahren zur Montage einer Nockenwelle (2) in einer Lagergasse eines Zylinderkopfes einer Verbrennungskraftmaschine, wobei das Verfahren zumindest die folgenden Schritte aufweist:
- Montieren mindestens eines Dichtringes (1) an der Nockenwelle (2) derart, dass der mindestens eine Dichtring (1) auf einen Bereich der Nockenwelle (2), in welchem wenigstens eine am äußeren Durchmesser der Nockenwelle (2) radial umlaufende Nut (3) ausgebildet ist, aufgeschoben wird, so dass der Dichtring (1) in der Nut (3) angeordnet ist; wobei der Dichtring (1) zumindest teilweise aus einem elastisch verformbaren Polymer, insbesondere einem Polytetrafluorethylen (PTFE) gebildet ist,
- Schieben eines Kalibrierwerkzeuges (4) mit einer rotationssymmetrischen Öffnung, deren kleinster Innendurchmesser größer als der Außendurchmesser der Nockenwelle (2) im Bereich der jeweiligen Nut (3) und kleiner als der Außendurchmesser des mindestens einen auf die Nockenwelle (2) im Bereich der Nut (3) aufgeschobenen Dichtrings (1) ist, derart über den mindestens einen Dichtring (1), oder
- Einschieben der Nockenwelle (2) derart in ein Kalibrierwerkzeug (4) mit einer rotationssymmetrischen Öffnung, deren kleinster Innendurchmesser größer als der Außendurchmesser der Nockenwelle (2) im Bereich der jeweiligen Nut (3) und kleiner als der Außendurchmesser des mindestens einen auf die Nockenwelle (2) im Bereich der Nut (3) aufgeschobenen Dichtrings (1) ist, dass der mindestens eine Dichtring (1) in die jeweilige Nut (3) eingedrückt sowie kraftschlüssig und formschlüssig in der Nut (3) gehalten wird, wobei
- die Nockenwelle (2) in Lager (5. 1- 5.n) der Lagergasse, die an einem Zylinderkopf der Verbrennungskraftmaschine angebracht sind, eingeführt wird.

3. Verfahren nach Anspruch 1 oder 2, **dadurch gekennzeichnet, dass** das Kalibrierwerkzeug (4) vor oder während des Einführens der Nockenwelle (2) in die Lagergasse von der Nockenwelle (2) abgezogen oder abgestreift wird.

4. Verfahren nach einem der vorhergehenden Ansprüche, **dadurch gekennzeichnet, dass** ein Kalibrierwerkzeug (4) eingesetzt wird, das zumindest einen sich konisch verjüngenden Bereich (4.1) ausgehend von einer Stirnseite einer Öffnung des Kalibrierwerkzeugs (4) aufweist, wobei der Innendurchmesser der Öffnung an der Seite des Kalibrierwerkzeugs (4), die zuerst auf den mindestens einen Dichtring (1) aufgeschoben wird, größer als der Außendurchmesser des mindestens einen Dichtrings (1) nach dem Aufschieben auf die Nockenwelle (2) ist.

5. Verfahren nach einem der vorhergehenden Ansprüche, **dadurch gekennzeichnet, dass** die Nockenwelle (2) vor dem Einführen in die Lager (5.1 - 5.n) der Lagergasse gekühlt wird.

6. Verfahren nach einem der vorhergehenden Ansprüche, **dadurch gekennzeichnet, dass** die Nockenwelle (2) vor dem Aufschieben des Kalibrierwerkzeuges (4) gekühlt wird.

7. Verfahren nach einem der vorhergehenden Ansprüche, **dadurch gekennzeichnet, dass** die Nockenwelle (2) vor dem Montieren des wenigstens einen Dichtringes (1) gekühlt wird.

8. Verfahren nach einem der Ansprüche 1 bis 6, **dadurch gekennzeichnet, dass** die Nockenwelle (2) mit dem bereits aufgeschobenen mindestens einen Dichtring (1) gemeinsam gekühlt wird.

9. Verfahren nach einem der vorhergehenden Ansprüche, **dadurch gekennzeichnet, dass** die Nockenwelle (2) mit dem bereits aufgeschobenen und in der wenigstens einen Nut (3) fixierten mindestens einen Dichtring (1) beim Einführen in die Lager (5.1 - 5.n) der Lagergasse durch ein vor dem in Einführrichtung der Nockenwelle (2) vor dem ersten Lager (5.1) angeordnetes Kalibrierwerkzeug (4) geschoben und dabei der mindestens eine Dichtring (1) tiefer in die wenigstens eine Nut (3) hinein gedrückt und dadurch kraftschlüssig und formschlüssig in der Nut (3) gehalten wird.

10. Verfahren nach einem der vorhergehenden Ansprüche, **dadurch gekennzeichnet, dass** das Kalibrierwerkzeug (4) vor dem Kühlen oder nach dem Kühlen über den mindestens einen Dichtring (1) geschoben und der mindestens eine Dichtring (1) tiefer in die jeweilige Nut (3) eingedrückt wird.

11. Verfahren nach einem der vorhergehenden Ansprüche, **dadurch gekennzeichnet, dass** der mindestens eine Dichtring (1) mit dem Kalibrierwerkzeug (4) soweit in die wenigstens eine Nut (3) hineingedrückt wird, dass die äußere Mantelfläche des Dichtrings (1) im Bereich seines kleinsten Innendurchmessers den Boden der jeweiligen Nut (3) nicht erreicht.

12. Verfahren nach einem der vorgehenden Ansprüche, **dadurch gekennzeichnet, dass** die Nockenwelle (2) mit dem bereits aufgeschobenen mindestens einen Dichtring (1) gemeinsam mit dem Kalibrierwerkzeug (4) oder ohne das Kalibrierwerkzeug (4) gekühlt wird.

13. Verfahren nach einem der vorgehenden Ansprüche, **dadurch gekennzeichnet, dass** zwei Dichtringe (1) in jeweils einer Nut (3) kraftschlüssig und formschlüssig angeordnet werden, die in Längsachsrichtung der Nockenwelle (2) in einem Abstand zueinander angeordnet sind.

## Claims

1. A method for mounting a camshaft (2) in a bearing line of a cylinder head cover of an internal combustion engine, wherein the method comprises at least the following steps:
- mounting at least one sealing ring (1) on the camshaft (2) in such a manner that the at least one sealing ring (1) is pushed onto a region of the camshaft (2) in which at least one groove (3) encircling radially on the outer diameter of the camshaft (2) is formed, and therefore the sealing ring (1) is arranged in the groove (3); wherein the sealing ring (1) is at least partially formed from an elastically deformable polymer, in particular a polytetrafluoroethylene (PTFE), **characterized by** the following process steps:
- pushing a calibrating tool (4) having a rotationally symmetrical opening, the smallest inside diameter of which is greater than the outside diameter of the camshaft (2) in the region of the respective groove (3) and is smaller than the outside diameter of the at least one sealing ring (1) pushed onto the camshaft (2) in the region of the groove (3) over the at least one sealing ring (1) in such a manner, or
- pushing the camshaft (2) into a calibrating tool (4) having a rotationally symmetrical opening, the smallest inside diameter of which is greater than the outside diameter of the camshaft (2) in the region of the respective groove (3) and is smaller than the outside diameter of the least one sealing ring (1) pushed onto the camshaft (2) in the region of the groove (3) in such a manner,
that the at least one sealing ring (1) is pressed into the respective groove (3) and is held in the groove (3) in a force-fitting and form-fitting manner.

2. A method for mounting a camshaft (2) in a bearing line of a cylinder head of an internal combustion engine, wherein the method comprises at least the following steps:
- mounting at least one sealing ring (1) on the camshaft (2) in such a manner that the at least one sealing ring (1) is pushed onto a region of the camshaft (2) in which at least one groove (3) encircling radially on the outer diameter of the camshaft (2) is formed, and therefore the sealing ring (1) is arranged in the groove (3); wherein the sealing ring (1) is at least partially formed from an elastically deformable polymer, in particular a polytetrafluoroethylene (PTFE),
- pushing a calibrating tool (4) having a rotationally symmetrical opening, the smallest inside diameter of which is greater than the outside diameter of the camshaft (2) in the region of the respective groove (3) and is smaller than the outside diameter of the at least one sealing ring (1) pushed onto the camshaft (2) in the region of the groove (3) over the at least one sealing ring (1) in such a manner, or
- pushing the camshaft (2) into a calibrating tool (4) having a rotationally symmetrical opening, the smallest inside diameter of which is greater than the outside diameter of the camshaft (2) in the region of the respective groove (3) and is smaller than the outside diameter of the least one sealing ring (1) pushed onto the camshaft (2) in the region of the groove (3) in such a manner, that the at least one sealing ring (1) is pressed into the respective groove (3) and is held in the groove (3) in a force-fitting and form-fitting manner, whereas
- the camshaft (2) is introduced into bearings (5.1 - 5.n) of a bearing line, said bearings being mounted on a cylinder head of the internal combustion engine.

3. The method as claimed in claim 1 or 2, **characterized in that** the calibrating tool (4) is pulled or stripped off the camshaft (2) before or during the introduction of the camshaft (2) into the bearing line.

4. The method as claimed in one of the preceding claims, **characterized in that** use is made of a calibrating tool (4) which comprises at least one conically tapering region (4.1) starting from an end side of an opening of the calibrating tool (4), wherein the inside diameter of the opening on that side of the calibrating tool (4) which is pushed first onto the at least one sealing ring (1) is greater than the outside diameter of the at least one sealing ring (1) after the latter has been pushed onto the camshaft (2).

5. The method as claimed in one of the preceding claims, **characterized in that** the camshaft (2) is cooled before being introduced into the bearings (5.1 - 5.n) of the bearing line.

6. The method as claimed in one of the preceding claims, **characterized in that** the camshaft (2) is cooled before the calibrating tool (4) is pushed on.

7. The method as claimed in one of the preceding claims, **characterized in that** the camshaft (2) is cooled before the at least one sealing ring (1) is mounted.

8. The method as claimed in one of claims 1 to 6, **characterized in that** the camshaft (2) together with the at least one sealing ring (1) already pushed thereon is cooled together therewith.

9. The method as claimed in one of the preceding claims, **characterized in that** the camshaft (2) with the at least one sealing ring (1) already pushed thereon and fixed in the at least one groove (3), upon being introduced into the bearings (5.1 - 5.n) of the bearing line is pushed by a calibrating tool (4) arranged in front of in front of the first bearing (5.1) in the introduction direction of the camshaft (2) and, in the process, the at least one sealing ring (1) is pressed deeper into the at least one groove (3) and is thereby held in the groove (3) in a force-fitting and form-fitting manner.

10. The method as claimed in one of the preceding claims, **characterized in that** the calibrating tool (4) is pushed over the at least one sealing ring (1) before the cooling or after the cooling, and the at least one sealing ring (1) is pressed deeper into the respective groove (3).

11. The method as claimed in one of the preceding claims, **characterized in that** the at least one sealing ring (1) is pressed with the calibrating tool (4) into the at least one groove (3) to an extent such that the outer circumferential surface of the sealing ring (1), in the region of its smallest inside diameter, does not reach the base of the respective groove (3).

12. The method as claimed in one of the preceding claims, **characterized in that** the camshaft (2) with the at least one sealing ring (1) already pushed thereon is cooled together with the calibrating tool (4) or without the calibrating tool (4).

13. The method as claimed in one of the preceding claims, **characterized in that** two sealing rings (1) are arranged in in each case one groove (3) in a force-fitting and form-fitting manner and are arranged at a distance from each other in the direction of the longitudinal axis of the camshaft (2).

## Revendications

1. Procédé de montage d'un arbre à cames (2) dans une voie de support d'un couvercle de culasse d'un moteur à combustion interne, le procédé comprenant au moins les étapes suivantes :
- le montage d'au moins une bague d'étanchéité (1) sur l'arbre à cames (2) de telle sorte que l'au moins une bague d'étanchéité (1) est enfilée sur une zone de l'arbre à cames (2) dans laquelle est réalisée au moins une rainure (3) s'étendant radialement sur le diamètre extérieur de l'arbre à cames (2), de telle sorte que la bague d'étanchéité (1) est agencée dans la rainure (3) ; la bague d'étanchéité (1) étant formée au moins partiellement d'un polymère élastiquement déformable, notamment d'un polytétrafluoroéthylène (PTFE), **caractérisé par** les étapes de procédé suivantes :
- le glissement d'un outil de calibrage (4) avec une ouverture à symétrie de rotation, dont le plus petit diamètre intérieur est supérieur au diamètre extérieur de l'arbre à cames (2) dans la zone de la rainure respective (3) et inférieur au diamètre extérieur de l'au moins une bague d'étanchéité (1) enfilée sur l'arbre à cames (2) dans la zone de la rainure (3), au-dessus de l'au moins une bague d'étanchéité (1), ou
- l'insertion de l'arbre à cames (2) dans un outil de calibrage (4) avec une ouverture à symétrie de rotation, dont le plus petit diamètre intérieur est supérieur au diamètre extérieur de l'arbre à cames (2) dans la zone de la rainure respective (3) et inférieur au diamètre extérieur de l'au moins une bague d'étanchéité (1) enfilée sur l'arbre à cames (2) dans la zone de la rainure (3),
de telle sorte que l'au moins une bague d'étanchéité (1) est enfoncée dans la rainure respective (3) et est maintenue dans la rainure (3) par adhérence et par complémentarité de forme.

2. Procédé de montage d'un arbre à cames (2) dans une voie de support d'une culasse d'un moteur à combustion interne, le procédé comprenant au moins les étapes suivantes :
- le montage d'au moins une bague d'étanchéité (1) sur l'arbre à cames (2) de telle sorte que l'au moins une bague d'étanchéité (1) est enfilée sur une zone de l'arbre à cames (2) dans laquelle est réalisée au moins une rainure (3) s'étendant radialement sur le diamètre extérieur de l'arbre à cames (2), de telle sorte que la bague d'étanchéité (1) est agencée dans la rainure (3) ; la bague d'étanchéité (1) étant formée au moins partiellement d'un polymère élastiquement déformable, notamment d'un polytétrafluoroéthylène (PTFE),
- le glissement d'un outil de calibrage (4) avec une ouverture à symétrie de révolution, dont le plus petit diamètre intérieur est supérieur au diamètre extérieur de l'arbre à cames (2) dans la zone de la rainure respective (3) et inférieur au diamètre extérieur de l'au moins une bague d'étanchéité (1) enfilée sur l'arbre à cames (2) dans la zone de la rainure (3), au-dessus de l'au moins une bague d'étanchéité (1), ou
- l'insertion de l'arbre à cames (2) dans un outil de calibrage (4) avec une ouverture à symétrie de rotation, dont le plus petit diamètre intérieur est supérieur au diamètre extérieur de l'arbre à cames (2) dans la zone de la rainure respective (3) et inférieur au diamètre extérieur de l'au moins une bague d'étanchéité (1) enfilée sur l'arbre à cames (2) dans la zone de la rainure (3), de telle sorte que l'au moins une bague d'étanchéité (1) est enfoncée dans la rainure respective (3) et est maintenue dans la rainure (3) par adhérence et par complémentarité de forme,
- l'arbre à cames (2) étant introduit dans des paliers (5.1 - 5.n) de la voie de support, qui sont disposés sur une culasse du moteur à combustion interne.

3. Procédé selon la revendication 1 ou 2, **caractérisé en ce que** l'outil de calibrage (4) est retiré ou enlevé de l'arbre à cames (2) avant ou pendant l'introduction de l'arbre à cames (2) dans la voie de support.

4. Procédé selon l'une quelconque des revendications précédentes, **caractérisé en ce qu'**un outil de calibrage (4) est utilisé, qui présente au moins une zone (4.1) se rétrécissant de manière conique à partir d'un côté frontal d'une ouverture de l'outil de calibrage (4), le diamètre intérieur de l'ouverture sur le côté de l'outil de calibrage (4) qui est enfilé en premier sur l'au moins une bague d'étanchéité (1) étant supérieur au diamètre extérieur de l'au moins une bague d'étanchéité (1) après l'enfilage sur l'arbre à cames (2).

5. Procédé selon l'une quelconque des revendications précédentes, **caractérisé en ce que** l'arbre à cames (2) est refroidi avant l'introduction dans les paliers (5.1 - 5.n) de la voie de support.

6. Procédé selon l'une quelconque des revendications précédentes, **caractérisé en ce que** l'arbre à cames (2) est refroidi avant l'enfilage de l'outil de calibrage (4) .

7. Procédé selon l'une quelconque des revendications précédentes, **caractérisé en ce que** l'arbre à cames (2) est refroidi avant le montage de l'au moins une bague d'étanchéité (1).

8. Procédé selon l'une quelconque des revendications 1 à 6, **caractérisé en ce que** l'arbre à cames (2) est refroidi conjointement avec l'au moins une bague d'étanchéité (1) déjà enfilée.

9. Procédé selon l'une quelconque des revendications précédentes, **caractérisé en ce que** l'arbre à cames (2) avec l'au moins une bague d'étanchéité (1) déjà enfilée et fixée dans l'au moins une rainure (3) est enfilé lors de l'introduction dans les paliers (5.1 - 5.n) de la voie de support par un outil de calibrage (4) agencé avant le premier palier (5.1) dans la direction d'introduction de l'arbre à cames (2), et l'au moins une bague d'étanchéité (1) est alors enfoncée plus profondément dans l'au moins une rainure (3) et est ainsi maintenue par adhérence et par complémentarité de forme dans la rainure (3).

10. Procédé selon l'une quelconque des revendications précédentes, **caractérisé en ce que** l'outil de calibrage (4) est glissé au-dessus de l'au moins une bague d'étanchéité (1) avant le refroidissement ou après le refroidissement et l'au moins une bague d'étanchéité (1) est enfoncée plus profondément dans la rainure respective (3) .

11. Procédé selon l'une quelconque des revendications précédentes, **caractérisé en ce que** l'au moins une bague d'étanchéité (1) est enfoncée avec l'outil de calibrage (4) dans l'au moins une rainure (3) dans une mesure telle que la surface d'enveloppe extérieure de la bague d'étanchéité (1) n'atteint pas le fond de la rainure respective (3) dans la zone de son plus petit diamètre intérieur.

12. Procédé selon l'une quelconque des revendications précédentes, **caractérisé en ce que** l'arbre à cames (2) est refroidi avec l'au moins une bague d'étanchéité (1) déjà enfilée, conjointement avec l'outil de calibrage (4) ou sans l'outil de calibrage (4).

13. Procédé selon l'une quelconque des revendications précédentes, **caractérisé en ce que** deux bagues d'étanchéité (1) sont agencées dans une rainure respective (3) par adhérence et par complémentarité de forme, lesquelles sont agencées à une distance l'une de l'autre dans la direction de l'axe longitudinal de l'arbre à cames (2).
